# EUROPÄISCHE PATENTSCHRIFT

(11) **EP 1 602 178 B1**
(45) Veröffentlichungstag und Bekanntmachung des Hinweises auf die Patenterteilung: **03.06.2009**
(21) Anmeldenummer: 04713846.6
(22) Anmeldetag: 24.02.2004
(51) Int. Cl.: H04B 1/16

(54) **Vorrichtung und Verfahren zum steuern des Leistungsverbrauchs einer kombinierten UMTS/GSM/EDGE-Funkstation**
Device and method for controlling the energy comsuption of a UMTS/GSM/EDGE combined radio station
Dispositif et procédé pour reguler la consommation d'énergie d'une station radio UMTS/GSM/EDGE combinée

(30) Priorität: 12.03.2003 DE 10310771
(43) Veröffentlichungstag der Anmeldung: 07.12.2005
(73) Patentinhaber: Infineon Technologies AG, 81669 München (DE)
(72) Erfinder: PILGRAM, Berndt, 80798 München (DE); WENZEL, Dietmar, 81549 München (DE)
(74) Vertreter: Patentanwälte Lambsdorff & Lange
(86) Internationale Anmeldenummer: PCT/DE2004/000339
(87) Internationale Veröffentlichungsnummer: WO 2004/082157

(56) Entgegenhaltungen:
- EP-A- 1 213 830
- DE-A- 10 009 683

## Beschreibung

Die Erfindung betrifft eine Vorrichtung zum Steuern des Leistungsverbrauchs einer Funkstation, insbesondere einer Mobilfunkstation, wobei die Funkstation zum Senden/Empfangen von Signalen von zumindest zwei Funkstandards mit differierenden Zeitrastern ausgelegt ist. Des Weiteren betrifft die Erfindung ein Verfahren zum Steuern des Leistungsverbrauchs einer Funkstation.

In Sende- und Empfangseinrichtungen von Mobilstationen sind eine Vielzahl von Aktionen auszulösen und Steuersignale zu erzeugen, die zeitlich mit einem speziellen, Mobilfunkstandard-spezifischen Zeitraster korreliert sind.

In den letzten Jahren haben sich im Mobilfunkbereich eine Reihe unterschiedlicher Standards etabliert, die fortentwickelt oder in Zukunft durch neue Standards ersetzt werden. Bekannte Beispiele für Mobilfunkstandards sind GSM (Global System for Mobile Communication), die als EDGE- (Enhanced Data Services for GSM Evolution-)Standard bezeichnete 8 PSK-(8-Phase Shift Keying-)Weiterentwicklung von GSM, sowie verschiedene auf dem Übertragungsverfahren CDMA (Code Division Multiple Access) basierende Standards wie beispielsweise UMTS (Universal Mobile Telecommunication System). Mit MBS (Mobile Broad Band System) ist derzeit bereits ein Mobilfunkstandard der vierten Generation in der Entwicklung.

Mit dem Vorhandensein von unterschiedlichen bzw. konkurrierenden Standards wachsen die Anforderungen an Mobilstationen für den Mobilfunk. Gewünscht werden Mobilstationen, die mehrere Mobilfunksysteme bzw. -standards gleichzeitig unterstützen können. Dies setzt voraus, dass die Mobilstation die unterschiedlichen Zeitraster der einzelnen Standards erzeugen und darauf basierend geeignete Ereignissteuerungsprozesse durchzuführen vermag.

Die Übertragungsverfahren, beispielsweise CDMA und TDMA, dieser beiden unterschiedlichen Mobilfunkstandards beruhen auf unterschiedlichen Symboltaktfrequenzen, wobei die übertragenen Daten üblicherweise in Übertragungsrahmen strukturiert sind, die eine jeweils vorgegebene Länge haben. Diese Struktur und/oder Länge jedes Übertragungsrahmens in einer kontinuierlichen Signalfolge ist vorgegeben und wird durch die Mobilstation erkannt. Die Mobilstation muss ihre zeitliche Ablaufsteuerung auf diese Struktur ausrichten. Innerhalb dieser Rahmenstruktur sind oftmals Zeitabschnitte vorhanden, in denen keine Aktivitäten der Mobilstation stattfinden. Insbesondere in den Zeiten, in denen die Mobilstation auf ankommende Anrufe wartet, im sogenannten Paging-Mode, sind längere Aktivitätspausen vorhanden, in denen der Leistungsverbrauch der Mobilstation auf ein Minimum reduziert werden sollte, um eine möglichst lange Bereitschaftszeit bei möglichst langer Energieversorgungskapazität zu erreichen. Innerhalb dieser Aktivitätspausen sollen daher bestimmte Funktionsblöcke angehalten oder ganz abgeschaltet werden können.

In der deutschen Offenlegungsschrift DE 100 09 683 A1 ist ein Stand der Technik genannt, bei dem zum Reduzieren des Leistungsverbrauchs in einer den Funkstandard GSM unterstützenden Mobilstation möglichst viele Einheiten wie Hochfrequenzoszillatoren, Zähler oder Frequenzteiler während Aktivitätspausen deaktiviert werden. Während einer Aktivitätspause wird der Zeitpunkt der nächsten Aktivierung der Mobilstation durch einen Niederfrequenzoszillator aufrechterhalten. Des Weiteren wird auf eine Unterbrechungsanforderung hin, die während einer derartigen Aktivitätspause auftritt, die noch bis zur nächsten Aktivierung des Systems verbleibende Zeitdauer derart reduziert, dass die reduzierte verbleibende Zeitdauer ausreicht, um die Aktivierung vorzubereiten. Dadurch wird die Ruhezustandszeit auf eine Unterbrechungsanforderung hin vermindert, ohne dass dabei die Synchronisation zwischen der Kommunikationseinheit und ihrer Basis- oder Hauptstation verloren geht. Nachteil bei dem bekannten Verfahren und der bekannten Mobilstation ist es, dass lediglich ein Funkstandard unterstützt wird. Das Betreiben einer Mobilstation, die mehrere Funkstandards unterstützt und bei der die Einheiten dieser Mobilstation, welche den unterschiedlichen Funkstandards zugeordnet sind, in Aktivitätspausen deaktiviert werden, ist mit dem aus dem Stand der Technik bekannten Verfahren und der Mobilstation nicht realisierbar.

EP 1 213 830 A1 offenbart eine Multi-Mode-Kommunikationsvorrichtung mit einem gemeinsamen Referenzoszillator, bei der zur Ableitung einer Zeitbasis für den jeweiligen Modus Schicht-1-Timer eingesetzt werden.

Aufgabe der Erfindung ist es, eine Vorrichtung und ein Verfahren zu schaffen, bei der bzw. bei dem der Leistungsverbrauch einer Funkstation, welche zumindest zwei Funkstandards unterstützt, reduziert werden kann.

Diese Aufgabe wird durch die Merkmale der unabhängigen Ansprüche gelöst.

Eine erfindungsgemäße Vorrichtung zum Steuern des Leistungsverbrauchs einer Funkstation weist zumindest zwei Funksysteme auf. Jedes der Funksysteme ist dazu ausgelegt, jeweils einen Funkstandard zu unterstützen, wobei die Funkstandards unterschiedlich sind. Die Funkstation, welche insbesondere als Mobilstation ausgebildet ist, ist zum Senden/Empfangen von Signalen dieser unterschiedlichen Funkstandards mit differierenden Zeitrastern ausgelegt. Ferner umfasst die erfindungsgemäße Vorrichtung eine erste frequenzerzeugende Einheit und eine Kontrolleinheit, wobei die Kontrolleinheit mit der ersten frequenzerzeugenden Einheit elektrisch verbunden ist, insbesondere dieser ersten frequenzerzeugenden Einheit nachgeschaltet ist. Die erste frequenzerzeugende Einheit ist insbesondere als Niederfrequenzoszillator ausgebildet. Darüber hinaus ist die Kontrolleinheit zum Steuern des Leistungsverbrauchs mit jedem Funksystem der Funkstation elektrisch verbunden.

Mit der erfindungsgemäßen Vorrichtung kann eine Funkstation realisiert werden, welche zumindest zwei unterschiedliche Funkstandards unterstützt und bei der die systemrelevanten Einheiten jedes Funksystems sowie weitere Einheiten der Funkstation abhängig von deren Anforderungsprofil und vom erforderlichen Betriebszustand mit einem jeweils benötigten Leistungsverbrauch bereitgestellt werden. Dadurch kann eine erhebliche Reduzierung des Leistungsverbrauchs der Funkstation erzielt werden, wodurch die Stand-by-Zeit der Funkstation wesentlich erhöht werden kann. Indem lediglich eine einzige Kontrolleinheit für alle Funksysteme zuständig ist, kann darüber hinaus der schaltungstechnische Aufwand minimiert und eine einfache Realisierung ermöglicht werden. Zusätzlich kann dadurch eine sehr kompakte und relativ kleine Vorrichtung, welche insbesondere auch im Hinblick einer Realisierung einer möglichst kleinen gesamten Funkstation erwünscht und vorteilhaft ist, ermöglicht werden. Insbesondere in Aktivitätspausen kann durch die erfindungsgemäße Vorrichtung der Leistungsverbrauch der Funkstation minimiert werden.

Insbesondere zur Steuerung der Funkstation während Aktivitätspausen weist bevorzugt jedes Funksystem eine separate Zeitsteuereinheit auf, wobei jede Zeitsteuereinheit über eigene Synchronisationsleitungen, insbesondere über jeweils eine einzige Synchronisationsleitung, die insbesondere bidirektional ausgebildet ist, mit der Kontrolleinheit elektrisch verbunden ist.

In vorteilhafter Weise umfasst jedes Funksystem einen Taktsignalgenerator. Die Kontrolleinheit ist mit lediglich einem der Taktsignalgeneratoren über eine zweite Signalleitung, welche zwischen der Kontrolleinheit und dem Taktsignalgenerator des entsprechenden Funksystem ausgebildet ist, elektrisch verbunden.

Bei einem bevorzugten Ausführungsbeispiel umfasst die Vorrichtung des Weiteren eine Prozessoreinheit, eine Energieversorgungseinheit und eine zweite frequenzerzeugende Einheit. Die Kontrolleinheit ist mit der Prozessoreinheit, mit der Energieversorgungseinheit und mit der zweiten frequenzerzeugenden Einheit, welche vorteilhafter Weise als Hochfrequenzoszillator ausgebildet ist, über jeweils eine separate Signalleitung elektrisch verbunden. Mittels der Kontrolleinheit sind die von der Prozessoreinheit, der Energieversorgungseinheit und der zweiten frequenzerzeugenden Einheit einnehmbaren Betriebszustände steuerbar, wobei die verschiedenen Betriebszustände durch unterschiedlichen Leistungsverbrauch gekennzeichnet sind. Dadurch ist es möglich, dass neben den Einheiten, die unmittelbar den jeweiligen Funksystemen zugeordnet sind, auch weitere Einheiten der Funkstation während einer Aktivitätspause deaktiviert oder mit reduziertem Leistungsverbrauch betrieben werden können und damit der Leistungsverbrauch der Funkstation nochmals reduziert werden kann.

In einer weiteren vorteilhaften Ausführung ist die Kontrolleinheit mit der Prozessoreinheit mit zwei Signalleitungen elektrisch verbunden. Bevorzugt sind dabei über die erste Signalleitung Signale übertragbar, mit denen die Zeitdauern der Aktivitätspausen, die insbesondere hinsichtlich Beginn und Dauer den differierenden Zeitrastern der Mobilfunksysteme angepasst sind, einer Funkstation programmierbar sind. Es kann weiterhin vorgesehen sein, dass über die zweite Signalleitung zwischen der Kontrolleinheit und der Prozessoreinheit Signale zum Umprogrammieren eines Funksystems übertragbar sind. Insbesondere kann eine Umprogrammierung während dem Anfangs-und/oder dem Endzeitpunkt der Aktivitätspause der Funkstation erfolgen.

Eine weitere vorteilhafte Ausgestaltung der Erfindung kennzeichnet sich dadurch, dass die Prozessoreinheit über eine Signalleitung mit jedem Funksystem, insbesondere mit jedem Taktsignalgenerator des jeweiligen Funksystems, elektrisch verbunden ist.

In bevorzugter Weise sind die Anfangs- und/oder die Endzeitpunkte der Betriebszustände, zu denen der Leistungsverbrauch der Funkstation verändert wird und/oder Zeitdauern der Betriebszustände mit verändertem Leistungsverbrauch durch die Kontrolleinheit einleitbar.

In vorteilhafter Weise werden durch die Funksysteme die Funkstandards UMTS, GSM und GSM/EDGE unterstützt.

Bei einem erfindungsgemäßen Verfahren zum Steuern des Leistungsverbrauchs einer Funkstation, insbesondere einer Mobilfunkstation, mit zumindest zwei Funksystemen, wobei die Funksysteme jeweils einen Funkstandard unterstützen und die Funkstation zum Senden/Empfangen von Signalen dieser zumindest zwei Funkstandards mit differierenden Zeitrastern ausgelegt ist, wird ein Umschalten von Einheiten der Funkstation in Betriebszustände, die durch unterschiedlichen Leistungsverbrauch charakterisiert werden, in Aktivitätspausen, die insbesondere den differierenden Zeitrastern hinsichtlich Beginn und Dauer in der Weise angepasst sind, dass die Aktivitätspausen in den jeweiligen Zeiteinheiten gemessen werden, der Funkstation durchgeführt.

Mit dem erfindungsgemäßen Verfahren kann der Leistungsverbrauch einer Funkstation minimiert werden und besonders in Aktivitätspausen eine erhebliche Reduzierung des Leistungsverbrauchs der Funkstation erzielt werden, wodurch die Stand-by-Zeit der Funkstation wesentlich erhöht werden kann. Das Verfahren kann in einfacher Weise und aufwandsarm durchgeführt werden.

Vorteilhafter Weise wird die Zeitdauer sowie der Anfangs-und/oder Endzeitpunkt der Aktivitätspause mittels einer Kontrolleinheit kontrolliert. Bevorzugt wird das Umschalten der Betriebszustände der Einheiten der Funkstation mittels der Kontrolleinheit durchgeführt und/oder unterstützt. In einer vorteilhaften Ausführung wird die einem Funksystem zugehörige Zeitsteuereinheit deaktiviert oder in einen Zustand mit reduziertem Leistungsverbrauch geschaltet. Vorteilhaft ist es, dass während einer Aktivitätspause, in der das Taktsignal eines Hochfrequenzoszillators deaktiviert ist, ein Ermitteln der Zeitdauer bis zum Endzeitpunkt dieser Aktivitätspause mittels eines Taktsignals eines Niederfrequenzoszillators durchgeführt wird.

Bevorzugt wird die Zeitdauer einer Aktivitätspause mittels eines Signals einer Prozessoreinheit in die Kontrolleinheit einprogrammiert. Es kann vorgesehen sein, dass durch die Prozessoreinheit ein zweites Signal erzeugt wird, das an einen Taktsignalgenerator des jeweiligen Funksystems übertragen wird. Mit diesem zweiten Signal wird das Auslösen eines Triggersignals zu einem Anfangszeitpunkt einer Aktivitätspause durch eine Zeitsteuereinheit des zugehörigen Funksystems in dem Taktsignalgenerator dieses Funksystems programmiert. Vorteilhafter Weise wird das Triggersignal der Zeitsteuereinheit eines Funksystems an die Kontrolleinheit übertragen. Bevorzugt wird nach dem Empfangen des Triggersignals durch die Kontrolleinheit, ein Abschaltsignal von der Kontrolleinheit an diejenige Zeitsteuereinheit gesendet, von der das Triggersignal vorab gesendet wird.

In einem bevorzugten Ausführungsbeispiel des erfindungsgemäßen Verfahrens, werden im Falle des Abschaltens oder Umschaltens in einen Zustand mit reduziertem Leistungsverbrauch einer zweiten frequenzerzeugenden Einheit, insbesondere des Hochfrequenzoszillators, und/oder einer Energieversorgungseinheit der Funkstation während der Aktivitätspause, die zweite frequenzerzeugende Einheit, insbesondere der Hochfrequenzoszillator und/oder die Energieversorgungseinheit vor dem Endzeitpunkt der Aktivitätspause wieder aktiviert.

Vorteilhafter Weise wird eine Subtraktionszeit ermittelt, um die verbleibende Zeitdauer bis zum Endzeitpunkt der Aktivitätspause zum Aktivieren des Hochfrequenzoszillators und/oder der Energieversorgungseinheit zu vermindern. Vorteilhaft ist es, wenn die Subtraktionszeit derart bemessen wird, dass innerhalb des Subtraktionszeitintervalls ein stabiles Taktsignal und/oder eine stabile Energieversorgung zum Endzeitpunkt der Aktivitätspause erreicht wird bzw. bereitgestellt wird.

Es kann vorgesehen sein, dass durch Übertragen eines Signals von einer Kontrolleinheit zu einer Prozessoreinheit zum Anfangs- und/oder Endzeitpunkt einer Aktivitätspause ein Umprogrammieren eines Funksystems, insbesondere ein Ändern von Abläufen, für deren Ändern kein exakt vorgegebener Zeitpunkt erforderlich ist, insbesondere ein Ändern von Taktteilerfaktoren und/oder ein Ein- oder Ausschalten oder ein Ändern einer Spannungsversorgung, eingeleitet wird.

Nachfolgend wird ein Ausführungsbeispiel der Erfindung anhand einer schematischen Zeichnung näher erläutert. Die einzige Figur zeigt ein Blockschaltbild einer erfindungsgemäßen Vorrichtung.

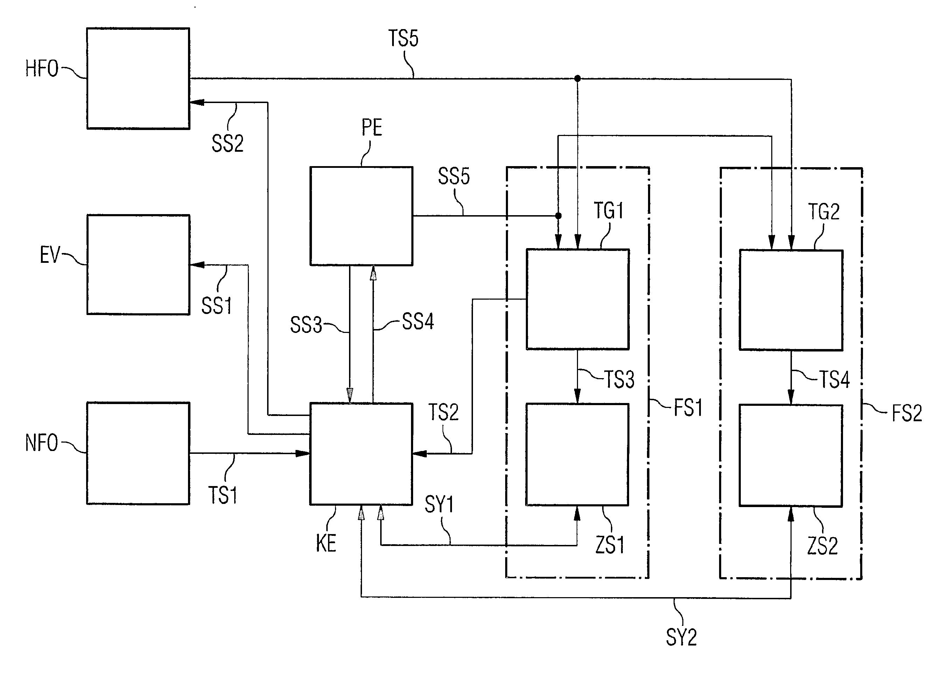

Eine erfindungsgemäße Vorrichtung (Fig. 1) ist in einer Mobilfunkstation angeordnet. Die Vorrichtung umfasst zwei Funksysteme FS1 und FS2, wobei im Ausführungsbeispiel das erste Funksystem FS1 den Mobilfunkstandard UMTS und das zweite Funksystem FS2 den Mobilfunkstandard GSM/EDGE unterstützt. Das erste Funksystem FS1 weist einen Taktsignalgenerator TG1 und eine Zeitsteuereinheit ZS1 auf. In analoger Weise umfasst das zweite Funksystem FS2 einen Taktsignalgenerator TG2 und eine Zeitsteuereinheit ZS2. Es kann vorgesehen sein, dass die Mobilstation weitere Funksysteme umfasst, die zusätzliche, zu den Standards UMTS und GSM/EDGE unterschiedliche Funkstandards unterstützen.

Des Weiteren weist die Vorrichtung eine Kontrolleinheit KE auf, mittels der Aktivitätspausen der Mobilstation kontrolliert werden. Die Kontrolleinheit KE ist mit dem ersten Funksystem FS1 und dem zweiten Funksystem FS2 elektrisch verbunden. Über eine Taktsignalleitung TS2 ist der Taktsignalgenerator TG1 des ersten Funksystems FS1 mit der Kontrolleinheit KE verbunden. Eine zweite elektrische Verbindung zwischen der Kontrolleinheit KE und dem ersten Funksystem FS1 ist durch eine bidirektionale Synchronisationsleitung SY1 zwischen der Zeitsteuereinheit ZS1 und der Kontrolleinheit KE realisiert. Die Zeitsteuereinheit ZS2 des zweiten Funksystems FS2 ist ebenfalls über eine bidirektionale Synchronisationsleitung SY2 mit der Kontrolleinheit KE elektrisch verbunden. Sowohl die Synchronisationsleitung SY1 als auch die Synchronisationsleitung SY2 können jeweils als Doppelleitung (differentielle Leitung) ausgebildet sein.

Ferner ist im ersten Funksystem FS1 der Taktsignalgenerator TG1 mit der Zeitsteuereinheit ZS1 über eine Taktsignalleitung TS3 und im zweiten Funksystem FS2 der Taktsignalgenerator TG2 mit der Zeitsteuereinheit ZS2 über eine Taktsignalleitung TS4 elektrisch verbunden.

Die Kontrolleinheit KE weist über eine Taktsignalleitung TS1 eine elektrische Verbindung zu einer ersten frequenzerzeugenden Einheit auf, die im Ausführungsbeispiel als Niederfrequenzoszillator NFO ausgebildet ist. Die Kontrolleinheit KE weist darüber hinaus über eine erste Steuersignalleitung SS1 eine elektrische Verbindung zu einer Energieversorgungseinheit EV und über eine zweite Steuersignalleitung SS2 eine elektrische Verbindung zu einer zweiten frequenzerzeugenden Einheit, die im Ausführungsbeispiel als Hochfrequenzoszillator HFO ausgebildet ist, auf. Zusätzlich ist die Kontrolleinheit KE über zwei Steuersignalleitungen SS3 und SS4 mit einer Prozessoreinheit PE elektrisch verbunden. Die Prozessoreinheit PE weist des Weiteren eine elektrische Verbindung zu den Funksystemen FS1 und FS2, insbesondere zu den Taktsignalgeneratoren TG1 und TG2, über eine Steuersignalleitung SS5 auf. Ferner ist der Hochfrequenzoszillator HFO mit den beiden Funksystemen FS1 und FS2, insbesondere mit den Taktsignalgeneratoren TG1 und TG2, über eine Taktsignalleitung TS5 elektrisch verbunden.

Nachfolgend wird ein Ablauf eines Steuerungsvorgangs des Leistungsverbrauchs der Mobilstation und deren Systemeinheiten erläutert. Im Ausführungsbeispiel sind der Hochfrequenzoszillator HFO, die Energieversorgungseinheit EV, der Niederfrequenzoszillator NFO und die Kontrolleinheit KE in einem aktiven Zustand, welcher als Betriebszustand mit einem relativ hohen Leistungsverbrauch im Vergleich zu einem Stand-by-Modus oder zum deaktivierten Zustand gekennzeichnet ist. Die Prozessoreinheit PE programmiert im Ausführungsbeispiel über die Steuersignalleitung SS5 den Taktsignalgenerator TG1 des ersten Funksystems FS1, wobei durch diesen Taktsignalgenerator TG1 ein Taktsignal für die Zeitsteuereinheit ZS1 über die Taktsignalleitung TS3 bereitgestellt wird. Die Zeitsteuereinheit ZS1 befindet sich in einem aktiven Betriebszustand mit relativ hohem Leistungsverbrauch.

Ebenfalls mittels der Prozessoreinheit PE wird über die Steuersignalleitung SS5 ein Ereignis in der Zeitsteuereinheit ZS1 programmiert. Durch das Ereignis wird in der Zeitsteuereinheit ZS1 festgelegt, dass ein Triggersignal zum Anfangszeitpunkt einer Aktivitätspause der Mobilstation ausgelöst wird. Des Weiteren wird durch die Prozessoreinheit PE die Zeitdauer der Aktivitätspause über die Steuersignalleitung SS3 in die Kontrolleinheit KE programmiert.

Zum Anfangszeitpunkt der Aktivitätspause wird das Triggersignal in der Zeitsteuereinheit ZS1 ausgelöst und an die Kontrolleinheit KE über die Synchronisationsleitung SY1 übertragen. Gleichzeitig wird der Signaleingang der Synchronisationsleitung SY1 der Zeitsteuereinheit ZS1 von Senden auf Empfangen umgestellt. Unmittelbar nachfolgend wird von der Kontrolleinheit KE ein Abschaltsignal an die Zeitsteuereinheit ZS1 gesendet, wodurch das Taktsignal für die Zeitsteuereinheit ZS1 abgeschaltet wird. Die Zeitsteuereinheit ZS1 wird in einen Betriebszustand mit reduziertem Leistungsverbrauch im Vergleich zum aktiven Zustand geschaltet. Es kann auch vorgesehen sein, dass die Zeitsteuereinheit ZS1 vollständig deaktiviert wird.

Ab dem Zeitpunkt, zu dem die Zeitsteuereinheit ZS1 in einen Betriebszustand mit reduziertem Leistungsverbrauch geschaltet wird bzw. das Taktsignal für die Zeitsteuereinheit ZS1 abgeschaltet wird, wird die verbleibende Zeitdauer der Aktivitätspause bis zu deren Endzeitpunkt mittels des Taktsignals des Niederfrequenzoszillators NFO gemessen, wobei das Taktsignal über die. Taktsignalleitung TS1 übertragen wird.

Werden der Hochfrequenzoszillator HFO und/oder die Energieversorgungseinheit EV auch von dem zweiten Funksystem FS2 nicht benötigt, so werden die beiden Einheiten HFO und/oder EV durch entsprechende Steuersignale über die Steuersignalleitungen SS1 und SS2 abgeschaltet oder in einen Betriebszustand mit reduziertem Leistungsverbrauch, einen Stand-by Zustand, geschaltet.

Indem vorteilhafter Weise die verbleibende Zeitdauer bis zum Endzeitpunkt der Aktivitätspause ermittelt wird, kann eine Subtraktionszeit bestimmt werden, um die die verbleibende Zeitdauer der Aktivitätspause verkürzt wird, um die abgeschalteten Einheiten HFO und/oder EV wieder rechtzeitig vor dem Endzeitpunkt der Aktivitätspause zu aktivieren. Der Hochfrequenzoszillator HFO und/oder die Energieversorgungseinheit EV werden durch die Kontrolleinheit KE über die jeweiligen Steuersignalleitungen SS1 und SS2 mittels entsprechender Steuersignale aktiviert. Die Subtraktionszeit wird derart bestimmt, dass vor dem Endzeitpunkt der Aktivitätspause ein stabiles Taktsignal über die Taktsignalleitung TS5 und eine stabile Spannungsversorgung der Energieversorgungseinheit EV bereitgestellt werden kann.

Ist die Aktivitätspause kein ganzzahliges Vielfaches der Periodendauer des Taktsignals des Niederfrequenzoszillators NFO, wird das Taktsignal des Taktsignalgenerators TG1 über die Taktsignalleitung TS2 am Ende des Zeitintervalls der Subtraktionszeit und vor dem Endzeitpunkt der Aktivitätspause bereitgestellt. Dadurch kann der nicht-ganzzahlige Rest der Zeitdauer der Aktivitätspause gemessen werden. Am Endzeitpunkt der Aktivitätspause sendet die Kontrolleinheit KE ein Startsignal über die Synchronisationsleitung SY1 an die Zeitsteuereinheit ZS1. Ab diesem Zeitpunkt ist die Zeitsteuereinheit ZS1 wieder aktiviert und läuft mit dem Taktsignal des Taktsignalgenerators TG1 weiter. Der Eingang der Synchronisationsleitung SY1 der Zeitsteuereinheit ZS1 wird auf Ausgang umgeschaltet.

Mittels der Steuersignalleitung SS4 zwischen der Kontrolleinheit KE und der Prozessoreinheit PE kann durch die Kontrolleinheit KE veranlasst werden, dass zu einem Anfangs- und/oder zu einem Endzeitpunkt einer Aktivitätspause Umprogrammierungen des Funksystems FS1 durchgeführt werden. Besonders können hierbei Vorgänge durchgeführt werden, die nicht zu einem genau vorgegebenen Zeitpunkt ausgeführt werden müssen bzw. bei denen eine Interrupt-Verzögerungszeit erlaubt ist, solange an der Prozessoreinheit PE ein Taktsignal anliegt. Beispielsweise ist es möglich Taktteilerfaktoren zu ändern oder Spannungsversorgungen ein- oder auszuschalten oder zu verändern.

Die Kontrolleinheit KE und der Niederfrequenzoszillator NFO sind auch während der Aktivitätspausen mit Spannung versorgt. In analoger Weise kann anstatt oder zusätzlich zum ersten Funksystem FS1 das zweite Funksystem FS2 bzw. Funktionseinheiten des zweiten Funksystems FS2 abgeschaltet oder in einen Zustand mit reduziertem Leistungsverbrauch geschaltet werden.

Für die Ermittlung des nicht-ganzzahlige Rests der Zeitdauer der Aktivitätspause reicht eine Verbindung zwischen einem einzigen Taktsignalgenerator (im Ausführungsbeispiel der Taktsignalgenerator TG1) eines Funksystems FS1 oder FS2 mit der Kontrolleinheit KE aus. Dieser einzige Taktsignalgenerator kann für alle Zeitsteueraufgaben verwendet werden, für die eine feinere Zeitauflösung als diejenige, welche durch das Taktsignal des Niederfrequenzoszillators NFO ermöglicht wird, benötigt wird. Somit genügt ein niederfrequenter und ein hochfrequenter Takt, um alle Aktivitätspausen der Funksysteme der Funkstation zu steuern.

Mittels der erfindungsgemäßen Vorrichtung und dem erfindungsgemäßen Verfahren ist es möglich, den Leistungsverbrauch einer Mobilstation, welche zumindest zwei unterschiedliche Funkstandards unterstützt, zu minimieren und insbesondere während Aktivitätspausen der Mobilstation möglichst viele Systemeinheiten der Mobilstation - Einheiten der Funksysteme und gegebenenfalls weitere Einheiten der Mobilstation - zu deaktivieren oder in einen Zustand mit reduziertem Leistungsverbrauch zu schalten. Dadurch kann die Stand-by Zeit der Mobilstation wesentlich erhöht werden. Zur Kontrolle des Leistungsverbrauchs aller Funksysteme der Mobilstation und deren Einheiten wird lediglich eine einzige Kontrolleinheit verwendet. Diese Kontrolleinheit verwaltet die gemeinsamen Ressourcen und stellt diese Ressourcen entsprechend dem jeweils erforderlichen Anforderungsprofil mit der benötigten Leistung bereit. Dadurch kann ermöglicht werden, dass ein Minimum an Funktionseinheiten der Mobilstation während Aktivitätspausen im aktiven Zustand betrieben werden. Vorteilhafter Weise ist die elektrische Verbindung zwischen der Kontrolleinheit und den Funksystemen, insbesondere den Zeitsteuereinheiten der Funksysteme, durch jeweils nur eine Synchronisationsleitung realisiert, wodurch Anschlüsse und Leitungsaufwand reduziert werden können und somit auch der schaltungstechnische Aufwand erheblich reduziert werden kann.

## Patentansprüche

1. Vorrichtung zum Steuern des Leistungsverbrauchs einer Funkstation mit zumindest zwei Funksystemen (FS1, FS2), wobei die Funksysteme (FS1, FS2) jeweils einen Funkstandard unterstützen und die Funkstation zum Senden/Empfangen von Signalen dieser zumindest zwei Funkstandards mit differierenden Zeitrastern ausgelegt ist, mit
- einer ersten frequenzerzeugenden Einheit (NFO) und
- einer Kontrolleinheit (KE), die zum Steuern des Leistungsverbrauchs mit der ersten frequenzerzeugenden Einheit (NFO) und mit jedem Funksystem (FS1, FS2) der Funkstation elektrisch verbunden ist,
**dadurch gekennzeichnet, dass**
- in der Funkstation Aktivitätspausen programmiert sind, welche hinsichtlich Beginn und Dauer den differierenden Zeitrastern der Funksysteme (FS1, FS2) angepasst sind, und
- die Kontrolleinheit (KE) mit jedem Funksystem (FS1, FS2) durch jeweils eine bidirektionale Synchronisationsleitung (SY1, SY2) elektrisch verbunden ist und die Kontrolleinheit (KE) und die Funksysteme (FS1, FS2) so eingerichtet sind, dass über die jeweilige Synchronisationsleitung (SY1, SY2) zu einem Anfangszeitpunkt einer Aktivitätspause und zu einem Endzeitpunkt einer Aktivitätspause jeweils ein elektrisches Signal übertragbar ist, durch welches ein Umschalten einer Einheit (ZS1, ZS2) des jeweiligen Funksystems zwischen einem Betriebszustand erhöhten Leistungsverbrauchs und einem Betriebszustand reduzierten Leistungsverbrauchs steuerbar ist, wobei
- von einem ersten Funksystem (FS1) zu einem Anfangszeitpunkt einer Aktivitätspause über eine erste Synchronisationsleitung (SY1) ein Trigger-Signal zu der Kontrolleinheit (KE) übertragbar ist, und
- von der Kontrolleinheit (KE) zu einem Endzeitpunkt der Aktivitätspause über die erste Synchronisationsleitung (SY1) ein Startsignal zu dem ersten Funksystem (FS1) übertragbar ist.

2. Vorrichtung nach Anspruch 1,
**dadurch gekennzeichnet, dass**
jedes Funksystem (FS1, FS2) eine Zeitsteuereinheit (ZS1, ZS2) aufweist und die Kontrolleinheit (KE) mit jeder Zeitsteuereinheit (ZS1, ZS2) über jeweils eine Synchronisationsleitung (SY1, SY2) elektrisch verbunden ist.

3. Vorrichtung nach einem der vorhergehenden Ansprüche,
**dadurch gekennzeichnet, dass**
jedes Funksystem (FS1, FS2) einen Taktsignalgenerator (TG1, TG2) aufweist und die Kontrolleinheit (KE) mit einem der Taktsignalgeneratoren (TG1, TG2) über eine Signalleitung (TS2) elektrisch verbunden ist.

4. Vorrichtung nach einem der vorhergehenden Ansprüche,
**dadurch gekennzeichnet, dass**
die Kontrolleinheit (KE) mit einer Prozessoreinheit (PE), einer Energieversorgungseinheit (EV) und einer zweiten frequenzerzeugenden Einheit (HFO) elektrisch verbunden ist und Betriebszustände der Prozessoreinheit (PE), der Energieversorgungseinheit (EV) und der zweiten frequenzerzeugenden Einheit (HFO), die durch unterschiedlichen Leistungsverbrauch charakterisiert sind, durch die Kontrolleinheit (KE) steuerbar sind.

5. Vorrichtung nach Anspruch 4,
**dadurch gekennzeichnet, dass**
die Kontrolleinheit (KE) mit der Prozessoreinheit (PE) mit einer ersten (SS3) und einer zweiten Signalleitung (SS4) elektrisch verbunden ist, wobei
- über die erste Signalleitung (SS3) Signale übertragbar sind, mit denen die Aktivitätspausen, die hinsichtlich Beginn und Dauer den differierenden Zeitrastern der Mobilfunksysteme angepasst sind, in der Funkstation programmierbar sind, und
- über die zweite Signalleitung (SS4) Signale zum Umprogrammieren eines Funksystems (FS1, FS2) übertragbar sind.

6. Vorrichtung nach Anspruch 5,
**dadurch gekennzeichnet, dass**
über die zweite Signalleitung (SS4) Signale zum Umprogrammieren eines Funksystems (FS1, FS2) während Anfangs- und/oder Endzeitpunkten von Aktivitätspausen der Funkstation übertragbar sind.

7. Vorrichtung nach einem der Ansprüche 4 bis 6,
**dadurch gekennzeichnet, dass**
die Prozessoreinheit (PE) über eine Signalleitung (SS5) mit jedem Funksystem (FS1, FS2) elektrisch verbunden ist.

8. Vorrichtung nach Anspruch 7,
**dadurch gekennzeichnet, dass**
die Prozessoreinheit (PE) über eine Signalleitung (SS5) mit jedem Funksystem (FS1, FS2) elektrisch verbunden ist.

9. Vorrichtung nach einem der vorhergehenden Ansprüche,
**dadurch gekennzeichnet, dass**
die Funkstandards zumindest die Standards UMTS, GSM und GSM/EDGE umfassen.

10. Verfahren zum Steuern des Leistungsverbrauchs einer Funkstation, welche zumindest zwei Funksysteme (FS1, FS2), eine Kontrolleinheit (KE) und jeweils eine die Kontrolleinheit (KE) mit einem Funksystem (FS1, FS2) elektrisch verbindende bidirektionale Synchronisationsleitung (SY1, SY2) enthält, wobei die Funksysteme (FS1, FS2) jeweils einen Funkstandard unterstützen und die Funkstation zum Senden/Empfangen von Signalen dieser zumindest zwei Funkstandards mit differierenden Zeitrastern ausgelegt ist, und in der Funkstation Aktivitätspausen programmiert sind, welche hinsichtlich Beginn und Dauer den differierenden Zeitrastern der Funksysteme (FS1, FS2) angepasst sind, bei welchem Verfahren
in den Aktivitätspausen jedes der Funksysteme (FS1, FS2) zu einem Anfangszeitpunkt einer Aktivitätspause und zu einem Endzeitpunkt einer Aktivitätspause jeweils ein elektrisches Signal über eine Synchronisationsleitung (SY1, SY2) übertragen wird, durch welches ein Umschalten einer Einheit (ZS1, ZS2) des jeweiligen Funksystems (FS1, FS2) zwischen einem Betriebszustand erhöhten Leistungsverbrauchs und einem Betriebszustand reduzierten Leistungsverbrauchs gesteuert wird, und
von einem ersten Funksystem zu einem Anfangszeitpunkt einer Aktivitätspause über eine erste Synchronisationsleitung ein Trigger-Signal zu der Kontrolleinheit übertragen wird, und von der Kontrolleinheit zu einem Endzeitpunkt der Aktivitätspause über die erste Synchronisationsleitung ein Startsignal zu dem ersten Funksystem übertragen wird.

11. Verfahren nach Anspruch 10,
**dadurch gekennzeichnet, dass**
die Zeitdauer und der Anfangs- und/oder Endzeitpunkt der Aktivitätspause mittels der Kontrolleinheit (KE) kontrolliert wird.

12. Verfahren nach einem der Ansprüche 10 oder 11,
**dadurch gekennzeichnet, dass**
das Umschalten der Betriebszustände der Einheiten der Funkstation mittels der Kontrolleinheit (KE) durchgeführt und/oder unterstützt wird.

13. Verfahren nach einem der Ansprüche 10 bis 12,
**dadurch gekennzeichnet, dass**
die von den jeweiligen Funksystemen (FS1, FS2) zugeordneten Einheiten der Funkstation in einer Aktivitätspause deaktiviert oder in einen Zustand mit reduziertem Leistungsverbrauch geschaltet werden.

14. Verfahren nach einem der Ansprüche 10 bis 13,
**dadurch gekennzeichnet, dass**
während einer Aktivitätspause, in der das Taktsignal einer zweiten frequenzerzeugenden Einheit deaktiviert wird, ein Ermitteln der Zeitdauer bis zum Endzeitpunkt dieser Aktivitätspause mittels eines Taktsignals eines Niederfrequenzoszillators (NFO) durchgeführt wird.

15. Verfahren nach einem der Ansprüche 10 bis 13,
**dadurch gekennzeichnet, dass**
die Dauer einer Aktivitätspause mittels eines Signals einer Prozessoreinheit (PE) in die Kontrolleinheit (KE) einprogrammiert wird.

16. Verfahren nach Anspruch 15,
**dadurch gekennzeichnet, dass**
durch die Prozessoreinheit (PE) ein zweites Signal erzeugt wird, das an einen Taktsignalgenerator (TG1, TG2) des jeweiligen Funksystems übertragen wird, wobei mit diesem zweiten Signal das Auslösen eines Triggersignals zu einem Anfangszeitpunkt einer Aktivitätspause durch eine Zeitsteuereinheit (ZS1, ZS2) des zugehörigen Funksystems (FS1, FS2) in dem Taktsignalgenerator (TG1, TG2) dieses Funksystems (FS1, FS2) programmiert wird.

17. Verfahren nach Anspruch 16,
**dadurch gekennzeichnet, dass**
das Triggersignal der Zeitsteuereinheit (ZS1, ZS2) eines Funksystems (FS1, FS2) an die Kontrolleinheit (KE) übertragen wird.

18. Verfahren nach Anspruch 17,
**dadurch gekennzeichnet, dass**
die Kontrolleinheit (KE) nach dem Empfangen des Triggersignals ein Abschaltsignal an diejenige Zeitsteuereinheit (ZS1, ZS2) sendet, von welcher das Triggersignal gesendet wird.

19. Verfahren nach Anspruch 13,
**dadurch gekennzeichnet, dass**
im Falle des Abschaltens oder Umschaltens in einen Zustand mit reduziertem Leistungsverbrauch des Hochfrequenzoszillators (HFO) und/oder einer Energieversorgungseinheit (EV) der Funkstation während der Aktivitätspause, der Hochfrequenzoszillator (HFO) und/oder die Energieversörgungseinheit (EV) vor dem Endzeitpunkt der Aktivitätspause wieder aktiviert werden.

20. Verfahren nach Anspruch 19,
**dadurch gekennzeichnet, dass**
eine Subtraktionszeit ermittelt wird, um die die verbleibende Zeitdauer der Aktivitätspause zum Aktivieren des Hochfrequenzoszillators (HFO) und/oder der Energieversorgungseinheit (EV) vermindert wird.

21. Verfahren nach Anspruch 20,
**dadurch gekennzeichnet, dass**
die Subtraktionszeit derart bemessen wird, dass innerhalb des Subtraktionszeitintervalls ein stabiles Taktsignal des Hochfrequenzoszillators (HFO) und/oder eine stabile Energieversorgung (EV) zum Endzeitpunkt der Aktivitätspause erreicht wird.

22. Verfahren nach einem der Ansprüche 10 bis 20,
**dadurch gekennzeichnet, dass**
durch Übertragen eines Signals von einer Kontrolleinheit (KE) zu einer Prozessoreinheit (PE) zum Anfangs- und/oder Endzeitpunkt einer Aktivitätspause ein Umprogrammieren eines Funksystems (FS1, FS2), insbesondere ein Ändern von Abläufen, für deren Ändern kein exakt vorgegebener Zeitpunkt erforderlich ist, insbesondere ein Ändern von Taktteilerfaktoren und/oder ein Ein- oder Ausschalten oder ein Ändern einer Spannungsversorgung, eingeleitet werden.

23. Verfahren nach einem der Ansprüche 10 bis 22,
**dadurch gekennzeichnet, dass**
in den Funksystemen zumindest die Funkstandards UMTS, GSM oder GSM/EDGE unterstützt werden.

## Claims

1. Apparatus for controlling the power consumption of a radio station having at least two radio systems (FS1, FS2), with the radio systems (FS1, FS2) each supporting one radio standard and the radio station being designed to transmit/receive signals to these at least two radio standards with different time patterns, having
- a first frequency generating unit (NFO), and
- a monitoring unit (KE) which is electrically connected to the first frequency generating unit (NFO) and to each radio system (FS1, FS2) in the radio station in order to control the power consumption,
**characterized in that**
- activity pauses are programmed in the radio station, the start and duration of which are matched to the differing time patterns of the radio systems (FS 1, FS2) and
- the monitoring unit (KE) is electrically connected to each radio system (FS1, FS2) by a respective bidirectional synchronization line (SY1, SY2), and the monitoring unit (KE) and the radio systems (FS1, FS2) are designed such that an electrical signal can in each case be transmitted via the respective synchronization line (SY1, SY2) at a start time of an activity pause and at an end time of an activity pause, which signal can be used to control switching of a unit (ZS1, ZS2) of the respective radio system between an operating state of increased power consumption and an operating state of reduced power consumption, wherein
- a trigger signal can be transmitted to the monitoring unit (KE) from a first radio system (FS1) at a start time of an activity pause via a first synchronization line (SY1), and
- a start signal can be transmitted to the first radio system (FS1) from the monitoring unit (KE) at an end time of the activity pause via the first synchronization line (SY1).

2. Apparatus according to Claim 1,
**characterized in that**
each radio system (FS1, FS2) has a time control unit (ZS1, ZS2), and the monitoring unit (KE) is electrically connected to each time control unit (ZS1, ZS2) via a respective synchronization line (SY1, SY2).

3. Apparatus according to one of the preceding claims,
**characterized in that**
each radio system (FS1, FS2) has a clock signal generator (TG1, TG2) and the monitoring unit (KE) is electrically connected to one of the clock signal generators (TG1, TG2) via a signal line (TS2).

4. Apparatus according to one of the preceding claims,
**characterized in that**
the monitoring unit (KE) is electrically connected to a processor unit (PE), to a power supply unit (EV) and to a second frequency generating unit (HFO) and the operating states of the processor unit (PE), of the power supply unit (EV) and of the second frequency generating unit (HFO) which are **characterized by** different power consumption, can be controlled by the monitoring unit (KE).

5. Apparatus according to Claim 4,
**characterized in that**
the monitoring unit (KE) is electrically connected to the processor unit (PE) by means of a first signal line (SS3) and a second signal line (SS4), in which case
- signals can be transmitted via the first signal line (SS3), by means of which signals the activity pauses whose start and duration are matched to the different time patterns of the mobile radio systems can be programmed in the radio station, and
- signals for reprogramming a radio system (FS1, FS2) can be transmitted via the second signal line (SS4).

6. Apparatus according to Claim 5,
**characterized in that**
signals for reprogramming a radio system (FS1, FS2) can be transmitted via the second signal line (SS4) during start and/or end times of activity pauses in the radio station.

7. Apparatus according to one of Claims 4 to 6,
**characterized in that**
the processor unit (PE) is electrically connected via a signal line (SS5) to each radio system (FS1, FS2).

8. Apparatus according to Claim 7,
**characterized in that**
the processor unit (PE) is electrically connected via a signal line (SS5) to each radio system (FS1, FS2).

9. Apparatus according to one of the preceding claims,
**characterized in that**
the radio standards include at least the UMTS, GSM and GSM/EDGE standards.

10. Method for controlling the power consumption of a radio station, which comprises at least two radio systems (FS1, FS2), a monitoring unit (KE) and a bidirectional synchronization line (SY1, SY2) in each case electrically connecting the monitoring unit (KE) to a radio system (FS1, FS2), with the radio systems (FS 1, FS2) each supporting one radio standard and the radio station being designed to transmit/receive signals to these at least two radio standards with different time patterns, and activity pauses being programmed in the radio station, the start and duration of which are matched to the differing time patterns of the radio systems (FS1, FS2), in which method
an electrical signal is in each case transmitted via a synchronization line (SY1, SY2) in the activity pauses of each of the radio systems (FS 1, FS2) at a start time of an activity pause and at an end time of an activity pause, which signal controls switching of a unit (ZS1, ZS2) of the respective radio system (FS1, FS2) between an operating state of increased power consumption and an operating state of reduced power consumption, and
a trigger signal is transmitted to the monitoring unit from a first radio system at a start time of an activity pause via a first synchronization line, and
a start signal is transmitted to the first radio system from the monitoring unit at an end time of the activity pause via the first synchronization line.

11. Method according to Claim 10,
**characterized in that**
the time duration and the start and/or end time of the activity pause are/is monitored by means of the monitoring unit (KE).

12. Method according to one of Claims 10 or 11,
**characterized in that**
the switching of the operating states of the units in the radio station is carried out and/or supported by means of the monitoring unit (KE).

13. Method according to one of Claims 10 to 12,
**characterized in that**
the units in the radio station which are allocated by the respective radio systems (FS 1, FS2) are deactivated, or are switched to a reduced power consumption state in an activity pause.

14. Method according to one of Claims 10 to 13,
**characterized in that,**
during an activity pause in which the clock signal of a second frequency generating unit is deactivated, the time period to the end of this activity pause is determined by means of a clock signal from an audio-frequency oscillator (NFO).

15. Method according to one of Claims 10 to 13,
**characterized in that**
the duration of an activity pause is programmed in the monitoring unit (KE) by means of a signal from a processor unit (PE).

16. Method according to Claim 15,
**characterized in that**
the processor unit (PE) produces a second signal which is transmitted to a clock signal generator (TG1, TG2) for the respective radio system, with the initiation of a trigger signal at a start time of an activity pause being programmed by this second signal by means of a time control unit (ZS1, ZS2) for the associated radio system (FS1, FS2) in the clock signal generator (TG1, TG2) for this radio system (FS1, FS2).

17. Method according to Claim 16,
**characterized in that**
the trigger signal for the time control unit (ZS1, ZS2) of a radio system (FS1, FS2) is transmitted to the monitoring unit (KE).

18. Method according to Claim 17,
**characterized in that,**
after receiving the trigger signal, the monitoring unit (KE) sends a switching-off signal to that time control unit (ZS1, ZS2) from which the trigger signal is sent.

19. Method according to Claim 13,
**characterized in that,**
in the event of switching off or switching to a state with reduced power consumption of the radio-frequency oscillator (HFO) and/or of a power supply unit (EV) in the radio station during the activity pause, the radio-frequency oscillator (HFO) and/or the power supply unit (EV) are activated again before the end of the activity pause.

20. Method according to Claim 19,
**characterized in that**
a subtraction time is determined, by which the remaining time period of the activity pause is reduced for activation of the radio-frequency oscillator (HFO) and/or of the power supply unit (EV).

21. Method according to Claim 20,
**characterized in that**
the subtraction time is designed such that a stable clock signal from the radio-frequency oscillator (HFO) and/or a stable power supply (EV) are/is achieved at the end of the activity pause, within the subtraction time interval.

22. Method according to one of Claims 10 to 20,
**characterized in that**
the transmission of a signal from a monitoring unit (KE) to a processor unit (PE) at the start and/or end of an activity pause, means that reprogramming of a radio system (FS 1, FS2) is initiated, in particular a change to procedure whose changing does not require an exactly predetermined time, in particular a change to clock division factors and/or switching on or off, or a change to a voltage supply.

23. Method according to one of Claims 10 to 22,
**characterized in that**
at least the UMTS, GSM or GSM/EDGE radio standards are supported in the radio systems.

## Revendications

1. Dispositif de réglage de la consommation de puissance d'une station radio ayant au moins deux systèmes (FS1, FS2) radio, dans lequel les systèmes (FS1, FS2) radio assistent chacun une norme radio et la station radio est conçue pour l'émission/réception de signaux de ces au moins deux normes radio avec des trames de temps différentes, comprenant :
- une première unité (NFO) produisant une fréquence et
- une unité (KE) de contrôle qui, pour régler la consommation de puissance, est reliée à la première unité (NFO) produisant une fréquence et à chaque système (FS1, FS2) radio de la station radio,
**caractérisé en ce que**
- dans la station radio sont programmées des pauses d'activité qui, du point de vue du début et de la durée, sont adaptées aux trames de temps différentes des systèmes (FS1, FS2) radio, et
- l'unité (KE) de contrôle est reliée électriquement à chaque système (FS1, FS2) radio par respectivement une ligne (SY1, SY2) bidirectionnelle de synchronisation et l'unité (KE) de contrôle et les systèmes (FS1, FS2) radio sont tels que, par la ligne (SY1, SY2) respective de synchronisation, peut être transmis à un instant de début d'une pause d'activité et à un instant de fin d'une pause d'activité, respectivement un signal électrique par lequel une commutation d'une unité (ZS1, ZS2) du système radio respectif entre un état de fonctionnement de consommation de puissance plus haute et un état de fonctionnement de consommation de puissance réduite peut être réglée, dans lequel
- il peut être transmis par un premier système (FS1) radio à un instant de début d'une pause d'activité, par l'intermédiaire d'une première ligne (SY1) de synchronisation, un signal de déclenchement à l'unité (KE) de contrôle, et
- il peut être transmis par l'unité (KE) de contrôle à un instant de fin de la pause d'activité, par l'intermédiaire de la première ligne (SY1) de synchronisation, un signal de démarrage au premier système (FS1) radio.

2. Dispositif suivant la revendication 1,
**caractérisé en ce que**
chaque système (FS1, FS2) radio a une unité (ZS1, ZS2) de réglage dans le temps et l'unité (KE) de contrôle est reliée électriquement à chaque unité (ZS1, ZS2) de réglage dans le temps par respectivement une ligne (SY1, SY2) de synchronisation.

3. Dispositif suivant l'une des revendications précédentes,
**caractérisé en ce que** chaque système (FS1, FS2) radio a un générateur (TG1, TG2) de signal d'horloge et l'unité (KE) de contrôle est reliée à l'un des générateurs (TG1, TG2) de signal d'horloge par une ligne (TS2) de signal.

4. Dispositif suivant l'une des revendications précédentes,
**caractérisé en ce que** l'unité (KE) de contrôle est reliée électriquement à une unité (PE) de processeur, à une unité (EV) d'alimentation en énergie et à une deuxième unité (HFO) de production d'une fréquence et des états de fonctionnement de l'unité (PE) de processeur, de l'unité (EV) d'alimentation en énergie et de la deuxième unité (HFO) produisant une fréquence, qui sont **caractérisées par** des consommations de puissance différentes, peuvent être réglés par l'unité (KE) de contrôle.

5. Dispositif suivant la revendication 4,
**caractérisé en ce que** l'unité (KE) de contrôle est reliée électriquement à l'unité (PE) de processeur par une première (SS3) et par une deuxième (SS4) ligne de signal, dans lequel
- il peut être transmis par la première ligne (SS3) de signal, des signaux par lesquels les pauses d'activité, qui sont adaptées du point de vue du début et de la durée des trames de temps différentes des systèmes de radio mobiles, peuvent être programmées dans la station radio, et
- par la deuxième ligne (SS4) de signal, des signaux peuvent être transmis pour reprogrammer un système (FS1, FS2) radio.

6. Dispositif suivant la revendication 5,
**caractérisé en ce que,** par la deuxième ligne (SS4) de signal, il peut être transmis des signaux de reprogrammation d'un système (FS1, FS2) radio pendant des instants de début et/ou de fin de pause d'activité de la station radio.

7. Dispositif suivant l'une des revendications 4 à 6,
**caractérisé en ce que** l'unité (PE) de processeur est reliée électriquement à chaque système (FS1, FS2) radio par une ligne (SS5) de signal.

8. Dispositif suivant la revendication 7,
**caractérisé en ce que** l'unité (PE) de processeur est reliée électriquement à chaque système (FS1, FS2) radio par une ligne (SS5) de signal.

9. Dispositif suivant l'une des revendications précédentes,
**caractérisé en ce que** les normes radio comprennent au moins les normes UMTS, GSM et GSM/EDGE.

10. Procédé de réglage de la consommation de puissance d'une station radio qui comporte au moins deux systèmes (FS1, FS2) radio, une unité (KE) de contrôle et respectivement une ligne (SY1, SY2) bidirectionnelle de synchronisation reliant électriquement l'unité (KE) de contrôle à un système (FS1, FS2) radio, les systèmes (FS1, FS2) radio assistant respectivement une norme radio et la station radio étant conçue pour émettre/recevoir des signaux de ces au moins deux normes radio avec des trames de temps différentes et il est programmé dans la station radio des pauses d'activité qui sont adaptées, en ce qui concerne le début et la durée, aux trames de temps différentes des systèmes (FS1, FS2) radio, procédé dans lequel dans les pauses d'activité de chacun des systèmes (FS1, FS2) radio, on transmet à un instant de début d'une pause d'activité et à un instant de fin d'une pause d'activité respectivement un signal électrique par une ligne (SY1, SY2) de synchronisation, par lequel une commutation d'une unité (ZS1, ZS2) du système (FS1, FS2) radio respectif entre un état de fonctionnement de consommation de puissance élevée et un état de fonctionnement de consommation de puissance réduite est réglée, et
on transmet par un premier système radio à un instant de début d'une pause d'activité, par une première ligne de synchronisation, un signal de déclenchement à l'unité de contrôle et on transmet par l'unité de contrôle à un instant de fin de la pause d'activité, par la première ligne de synchronisation, un signal de démarrage au premier système radio.

11. Procédé suivant la revendication 10,
**caractérisé en ce que** l'on contrôle la durée et l'instant de début et/ou l'instant de fin de la pause d'activité au moyen de l'unité (KE) de contrôle.

12. Procédé suivant l'une des revendications 10 ou 11,
**caractérisé en ce que** l'on effectue et/ou on assiste la commutation des états de fonctionnement des unités de la station radio au moyen de l'unité (KE) de contrôle.

13. Procédé suivant l'une des revendications 10 à 12,
**caractérisé en ce que** l'on désactive les unités de la station radio associées aux systèmes (FS1, FS2) radio respectifs dans une pause d'activité ou on les met dans un état de consommation de puissance réduite.

14. Procédé suivant l'une des revendications 10 à 13,
**caractérisé en ce que,** pendant une pause d'activité dans laquelle le signal d'horloge d'une deuxième unité produisant une fréquence est désactivée, on effectue une détermination de la durée jusqu'à l'instant de fin de cette pause d'activité au moyen d'un signal d'horloge d'un oscillateur (NFO) à basse fréquence.

15. Procédé suivant l'une des revendications 10 à 13,
**caractérisé en ce que** l'on programme dans l'unité (KE) de contrôle la durée d'une pause d'activité au moyen d'un signal d'une unité (PE) de processeur.

16. Procédé suivant la revendication 15,
**caractérisé en ce que** l'on produit par l'unité (PE) de processeur un deuxième signal qui est transmis à un générateur (TG1, TG2) de signal d'horloge du système radio respectif, dans lequel par ce deuxième signal on programme le déclenchement d'un signal de déclenchement, à un instant de début d'une pause d'activité, par une unité (ZS1, ZS2) de réglage dans le temps du système (FS1, FS2) radio associée, dans le générateur (TG1, TG2) de signal d'horloge de ce système (FS1, FS2) radio.

17. Procédé suivant la revendication 16,
**caractérisé en ce que** l'on transmet le signal de déclenchement de l'unité (ZS1, ZS2) de réglage dans le temps d'un système (FS1, FS2) radio à l'unité (KE) de contrôle.

18. Procédé suivant la revendication 17,
**caractérisé en ce que** l'unité (KE) contrôle émet, après la réception du signal de déclenchement, un signal d'arrêt vers l'unité (ZS1, ZS2) de réglage du temps, par laquelle le signal de déclenchement est émis.

19. Procédé suivant la revendication 13,
**caractérisé en ce que,** dans le cas de l'arrêt ou de la commutation dans un état de consommation de puissance réduite de l'oscillateur (HFO) de haute fréquence et/ou d'une unité (EV) d'alimentation en énergie, la station radio est réactivée pendant la pause d'activité, tandis que l'oscillateur (HFO) de haute fréquence et/ou l'unité (EV) d'alimentation en énergie sont réactivés avant l'instant de fin de la pause d'activité.

20. Procédé suivant la revendication 19,
**caractérisé en ce que** l'on détermine un temps de soustraction pour diminuer la durée restante de la pause d'activité pour l'activation de l'oscillateur (HFO) de haute fréquence et/ou de l'unité (EV) d'alimentation en énergie.

21. Procédé suivant la revendication 20,
**caractérisé en ce que** l'on donne au temps de soustraction une dimension telle que, dans l'intervalle du temps de soustraction, on obtient un signal d'horloge stable de l'oscillateur (HFO) de haute fréquence et/ou une consommation (EV) d'énergie stable à l'instant de fin de la pause d'activité.

22. Procédé suivant l'une des revendications 10 à 20,
**caractérisé en ce qu'**en transmettant un signal d'une unité (KE) de contrôle à une unité (PE) de processeur à l'instant de début et/ou de fin d'une pause d'activité, on lance une reprogrammation d'un système (FS1, FS2) radio, notamment une modification des déroulements, modification pour laquelle un instant prescrit exactement n'est pas nécessaire, notamment une modification de facteur de diviseur d'horloge et/ou un branchement ou un débranchement ou une modification d'une alimentation en tension.

23. Procédé suivant l'une des revendications 10 à 22,
**caractérisé en ce que** au moins les normes UMTS, GSM ou GSM/EDGE radio sont assistées dans les systèmes radio.
